# EUROPEAN PATENT APPLICATION

(11) **EP 2 323 084 A1**
(43) Date of publication of application: **18.05.2011**
(21) Application number: 09290813.6
(22) Date of filing: 23.10.2009
(51) Int. Cl.: G06Q 10/00

(54) **Artifact management method**

(71) Applicant: Alcatel Lucent, 75008 Paris (FR)
(72) Inventor: Daenen, Koen, 3150 Haacht (BE)
(74) Representative: Narmon, Gisèle Marie Thérèse

(57) **Abstract**

The present invention relates to an Artifact management method, for managing an artifact in at least one repository under control of an artifact management server. The at least one repository is coupled to the artifact management server over a communications-link. The method includes the step of capturing at least one context of the artifact at receipt of a trigger at the artifact management server and furthermore the step of associating by the artifact management server, the captured context with the artifact maintained in the at least one repository.

## Description

The present invention relates to an Artifact management method, for managing an artifact in at least one artifact repository under control of an artifact management server.

Examples of such artifacts are files like photographs, music, movies, office documents, but also content assets like people profiles, emails, blogs as well as media streams or video- and audio channels, or any addressable object on the Internet.

Such an artifact management server and a related artifact management method are e.g. known from user-created content management systems such as YouTube and Flickr that both include an artifact management server and artifact repository or aggregated content management systems such as Menagerie Web Object Manager, further referred to as WOM existing out of an artifact management server coupled to one or more artifact repositories, that may or mat not be part of another user-created content management system. Menagerie Web Object Manager, further referred to as WOM is a composite Web application that lets users organize and share their distributed Web objects such as photographs, movies, and office documents stored on Web services such as Flickr, YouTube and Google Docs. With WOM, users can create new virtual folders, populate those folders with collections of distributed Web objects, and share the folders with other users or services, which is disclosed in conference proceedings by R. Geambasu, C. Cheung, A. Moshchuk, S. D. Gribble. H. M. Levy, _Organizing and Sharing Distributed Personal Web-Service Data_, Proceeding of the l7th international conference on World Wide Web (Beijing, China, April 21-25, 2008) pp. 755-764.

In general it is referred to as a management system for artifacts that manages the artifact directly on a storage system, on a virtual file system or indirectty via reference to an external system that can store artifacts; all case being referred to as artifact repository in this text. References, typically encoded in URLs, may be (1) a public URL or (2) a reference including a unique identified, an unforgeable token of authority and a application domain + path of Web application API, such as Google Docs, Flickr and YouTube or (3) a reference including a unique identified, an unforgeable token of authority and a device hostname (or IP-address) + path of remote access API of the given device. Such Web application or remote access API are typically based on protocols as HTTP, FTP, LDAP, IMAP or alike. The use of references including an unforgeable token of authority is known as capability-based security, disclosed in R. S. Fabry, "Capbility-based addressing", Communications of the ACM. Volume 17, Issue 7 (July 1974). pp. 403 - 412.

One of the supported functions of such artifact management system is to find back the artifacts stored in the artifact repository or repositories. To find back any artifact in such system, one can (1) use a location based approach, such as with traditional file system by specifying or selecting the volume and hierarchical folder names or (2) one can search based on the content (known as full text search as e.g. Google does) or (3) based on meta data, i.e. text keywords, which are either stored embedded in the artifact or associated with the artifact by the management system.

People profiles, typically are searched for based on the people's name, address, telephone number; music typically is searched for based on song-title, album-name or artist; personal photos and videos are typically searched for based on date or user-generated tags associated to the files. The latter approach is explicitly supported by e.g. Flickr and YouTube.

The three methods to find artifacts as described above are also used to identify an artifact or a group of artifacts to perform management actions such as copy, move, delete, rename, set sharing level, or configure the placing of replicas of the said artifact or group of artifacts. The use of meta-data, amongst which user tags, is not only popular to find data, it is also found to be more intuitive for normal user to perform file management action such as configuring the placing of replicas.

However, the availability of such tags especially on private data and the personal relevance of public tags are not always sufficient to efficiently search or identify the desired content. This is due to the fact that the searching user forgot the information or never possessed any such information. Users are lazy and do not have to attitude or time to add tags in order to find back data later on.

An objective of the present invention is to provide an artifact management system or artifact management method of the above known type but wherein the seanthabitity and identification of artifacts maintained in such a system is improved.

According to the invention, this objective is achieved by the method described in claim 1, the system described in claim 4, the artifact management server as described in claim 6, the context capturing device as described in claim 10 and the context repository as described in claim 12.

Indeed, by at receipt of a trigger at an artifact management server, capturing at least one context of the artifact, by means of a context capturing device which is under control of the artifact management server, and by subsequently associating the at least one context captured, with the artifact that is maintained in the at least one repository, this context may be applied for improving the searchability and identification of artifacts by the system.

The at least one context of the artifact may include information on the context of the artifact it selves but alternatively or additionally, information on the context of the user of the system that has invoked the trigger.

The information on the context of the artifact and or information on the user may be any digital representation of the at least one context (being textual or binary data or a reference to a digitalized object).

By first capturing a snapshot of the context of the artifact and/or the context of actor invoking the trigger on the management system and subsequently associating this sensed and captured context with the artifact, this context (information) can be applied for improving the searchability and identification of the associated artifact by applying this captured context that is associated to the artifact for searching or identifying the intended artifact or group of artifacts for instance by using this context as keywords for searching artifacts.

In case a user of such artifact management system does not know the title, the date, the author or any keyword that characterizes the artifact, where the artifact either being a content asset or a people profile, the context (especially your context, your mood, physical location, persons in the room, etc) in which a user met this person or context in which the content asset was created may be applicable and usable (e.g. by means of keyword) for searching or identifying the respective content asset or the people profile.

Hence, at a later moment of time a user can search in this captured context-data to find back the required artifact based on the associated context data, or he can identify a group of artifacts based on the associated context data to perform a management action on the group as a whole.

Another characteristic feature of the present invention is described in claim 2 and claim 9.

Based on at least one context associated with an artifact, the artifact can be indentified first and subsequently retrieved from a repository, under control of a management server that is connected to this at least one repository where the artifact is stored.

Hence, as mentioned before, at a later moment of time a user can search in this captured context-data to find back the required artifact based on the associated context data, or he can identify a group of artifacts based on the associated context data to perform a management action on the group as a whole.

A further characteristic feature of the present invention is described in claim 3.

The trigger is a management request from the client device directed to the management server e.g. being an indication of creation of an artifact or the execution of any action on the existing artifact. (people profile doc, video picture etc).

Hence a trigger is generated at creation of an artifact like a document or a people profile. In addition a trigger is generated as well in case some actions performed on an existing artifact where such action may be the update, opening, tagging, delete (i.e. move to trash), rename, share, download etc. A management request may be (1) adding an artifact to the scope of the management system by creation via upload or other mechanism or (2) the execution of any action performed on an existing artifact where such action may be the update, opening, tagging, delete (i.e. move to trash), rename, share, download etc.

Another characterizing embodiment of the present invention is that contextual events may be applied or used to trigger the management system to take a contextual snapshot and associate it to artifact that is related to the given contextual event. For example, when a person A meets a person B, while person B's profile is stored or referred to as an artifact in the management system used by person A, this artifact gets associated with the contextual information of when and where A and B met each other.

Examples of context information of the user making the management request are: date, present location (which may include address and name of the meeting room), number of people in the room he is in, invitee list of the meeting the user is participating, people in the user's proximity, people the user is connected with via a communication channel as telephony, instant messaging channel or alike, current local weather conditions, current locally, personally or generally important life or news events, actual song broadcasted on the radio channel the user is actually listening at, actual emotions and/or feelings (tired, sweating, thirsty, hungry, laughing etc.) of the user.

Context snapshot can be obtained by sensor-based measurements or by data retrieved from other systems that manage, produce or store relevant contextual information.

In case of a people profile, the context of the artifact can be any of the above examples applied on the person of the profile. In case of a photo, audio or video content, the context of the artifact can be context of the actual physical object that is represented on the given content. For example face and/or voice recognition methods can be used to identify a person based on a photo, video or audio fragment. Similar analysis can be used to recognize object such as statues (e.g. Eifel tower). Once the person is identified, the associated context can be queried similar as described above. In case of an object such as the Eifel tower related context can exist out of: status (open/close) for visitors, status of the lights illuminating the tower, number of visitors, etc.

Further characterizing embodiments of the present subject are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Simitarty, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

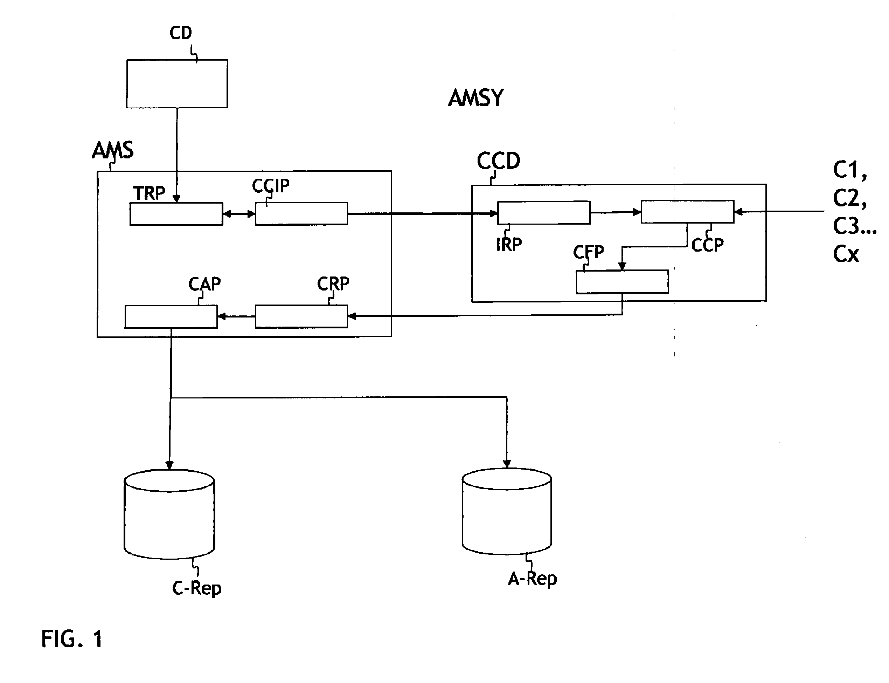

Fig. 1 represents the functional representation of the artifact management system of the present invention and in addition the functional structure of the artifact management server AMS, the context capturing device CCD, the artifact repository A-REP and the context repository C-REP according to the present invention.

In the following paragraphs, referring to the drawings, an implementation of the artifact management system including an artifact management server AMS, an artifact repository A-REP, the context capturing device CCD and the context repository C-Rep according to the present invention will be described.

In the first paragraph of this description the main elements of the artifact management system as presented in FIG. 1 are described. In the second paragraph, all connections between the before mentioned elements and described means are defined. Subsequently all relevant functional means of the client device CD for instance being a browser application running on any personal computer device like a PC, mobile device, TV or media player, are described followed by a description of all interconnections.

A first essential element of the artifact management system according to the present invention is the artifact management server AMS that is able to manage artifacts maintained in at least one artifact repository A-Rep. The artifact management server AMS is able to manage, i.e. store, modify or retrieve an artifact that is stored in at least one artifact repository A-REP.

This artifact management server AMS is able to manage artifacts over one or more artifact repositories A-Rep, where web applications like YouTube, Picasa and/or Flickr each are examples of possible separate repositories.

Furthermore, there is at least one capturing device CCD that is able to capture a context of a person or any context belonging to a certain artifact.

The AMS is capable of uniquely identify each artifact and user. It can use any attribute related the artifact, the user or current time as an input parameter for the CCD to capture the context, as the CCD may not know or use the same unique identifiers as the AMS for artifacts and persons. For example, the AMS may use the telephone number, email-address or sensor identification out of a people profile and pass it to the CCD as an input parameter to capture the context. The CCD may either use the input parameter from the AMS directly or map it to another parameter based on a managed profile identified by the input parameter to finally retrieve the context based on a sensor or out of the external server. Example: a telephone number can be related to a SIM-card and be used to trace location and as such be used to query the temperature of a heat sensor in the neighborhood or to query the weather station of the given location.

Third, there is one single context repository C-REP or a plurality of distributed context repositories C-Rep (whereof only one is shown in the figures), containing an association of the at least one context captured by the context capturing device CCD with the artifact maintained in at least one repository or the at least one context captured by the context capturing device CCD with a reference to the artifact maintained in any of the repositories.

Finally, there may be a client device CD, for instance being a browser application running on a computer device like a PC, mobile device, TV or media player. This client device CD is able to control the management of the artifacts stored on the artifacts repositories by means of a trigger, i.e. by sending management requests to the artifact management server AMS for the factual managing each of the artifacts stored via the artifact management system AMS. Now it is assumed that the client device CD e.g. is a personal computer in this embodiment with an internet browser for managing files stored on a Web service like Flickr.

The client device CD may be coupled to the artifact management server AMS over a wireless or wired connection like mobile internet access network or fixed internet access network.

The capturing device CCD may be coupled to the management server AMS over a local area network, Internet or any form of IP network.. Each of the context repository C-Rep and the artifact repository A-Rep may be coupled to the artifact management server AMS over a local area network, Internet or any form of IP network.

The artifact management server AMS includes a context associating part CAP, that is able to generate an association of at least one context that is captured by the context capturing device CCD with the artifact that is maintained in the at least one repository.

The context associating part CAP further is adapted to store the generated association in a context repository C-Rep.

In addition, the context associating part CAP further is adapted to retrieve an artifact that is maintained by the at least one artifact repository A-Rep based on a context of the at least one context in the association of the at least one context captured by the context capturing device CCD with the artifact maintained in the at least one repository.

Further the artifact management server AMS includes a context capture instructing part CCIP that is able to instruct a context capturing device CCD to capture at least one context of user sending a management request and/or at least one context of the artifact maintained in the at least one repository at receipt of a trigger at the artifact management server AMS. In addition the artifact management server AMS includes a trigger receiving part TRP that is adapted to receive a trigger for indicating the capturing device to capture at least one context of the user and/or a certain artifact maintained in at least one repository. The trigger in this embodiment is assumed to be a management request from the browsing device at any artifact (content asset) management action.

The context retrieving part CRP in the artifact management server is able to retrieve at least one context that is collected by the context capturing device CCD.

The context capturing device CCD first comprises a Instruction reception part IRP that is able receive a context capture instruction from the artifact management server and further comprises a context capturing part CCP that is adapted to capture at least one context of a user and/or a context of an artifact maintained in the at least one artifact repository A-REP at receipt of a trigger, i.e. the management request at the artifact management server AMS. The Context capturing device CCD further comprises a context forwarding part CFP that is adapted to forward the collected context corresponding to a certain user and/or artifact.

The artifact management server AMS has an input/output-terminal that is at the same time an input/output terminal of the trigger receiving part TRP. The customer device CD has an input/output terminal that is coupled to this input/output terminal of the artifact management server AMS.

The trigger receiving part TRP is further coupled to the context capture instructing part CCIP that further has an output terminal that is at the same time an output-terminal of the artifact management server AMS.

The context retrieving part CRP has an input/output-terminal that is at the same time input/output terminal of the artifact management server AMS. The context retrieving part CRP further is coupled to the context associating part CAP that further has an input/output-terminal that is at the same time input/output terminal of the artifact management server AMS.

The Instruction reception part IRP has an input/output-terminal that is at the same time input/output terminal of the context capturing device CCD. The Instruction reception part IRP further is coupled to the context capturing part CCP that in tum is coupled to the context forwarding part CFP. The context capturing device CCD may have an input terminal that is at the same time an input-terminal of the context capturing device and/ or may alternately be coupled to internal sensor devices

The context forwarding part CFP has an output-terminal that is at the same time output terminal of the context capturing device CCD which output is coupled to an input of the artifact management server AMS.

In order to explain the operation of the present invention it is assumed that a certain user manages his digital content from his client device CD: e.g. he uses an application (e.g. Flickr application such as jUploadr or Flickr AlbumMaker), either Installed on his device (personal computer, iPhone, etc) or accessed via a internet browser to manage his data stored on a artifact repository A-REP, e.g. his personal photo repository on the Flickr service. The user retrieves, opens or adds etc. a certain content asset like a picture from or to his picture collection maintained in the artifact repository A-REP Actions such as create, update, open, tag, etc are examples of actions that can trigger the process of taking a snapshot of the current context of the user and/or of the picture it selves. This action of opening, retrieving etc. an artifact like the picture is considered a trigger for the artifact management server and intercepted by the a trigger receiving part TRP of the artifact management server that forwards the triggering instruction to the context capture instructing part CCIP that as a response to the received trigger instruction sends an instruction to the instruction receiving part IRP of the context capturing device CCD to capture at least one context of the user and/or the artifact, i.e. the certain picture in this embodiment which is maintained in the at least one artifact repository at receipt of a trigger at said artifact management server AMS. The context capturing part CCP including or being coupled to a plurality of sensors for where each sensor is able to determine a certain context like the contexts C1, C2, ... C5, which respectively may be the location of the user, his blood pressure, the current whether conditions, the room temperature, and the person he is currently calling with which are sensed respectively via the coupled sensors for sensing the temperature and the coupled telephone communication system.

The context capturing device CCP then captures the contexts of the meant artifact maintained in the at least one repository at receipt of the trigger at said artifact management server AMS. All of the sensed contexts, i.e. the location of the user, his blood pressure, the current whether conditions, room temperature, and the person he is currently calling with which are sensed via the coupled sensors for sensing the temperature and the coupled telephone communication system are sent from the context capturing part CCP, by means of the context forwarding part CFP, to the context receiving part CRP of the artifact management server AMS.

The context associating part CAP of the artifact management server AMS subsequently generates a new association for the picture maintained in Flickr where this new association includes the at least one context captured by said context capturing device being the respective contexts.. C1, C2, C3, C4 and C5 and a reference to the artifact maintained in the at least one repository in this embodiment thus being the picture maintained in Flickr.

Subsequently the new created association is stored under control of the context associating part CAP in the context repository C-REP, which could be the meta-data database of Flicker.

Alternatively, an existing association for the artifact could be updated with newly determined context which could occur at any triggering action performed at an existing artifact (e.g. the picture). In this way the existing association of an artifact is enriched.

Although this example is described for a picture photograph stored in an artifact repository like Flickr or YouTube, the same teaching is valid for any content asset like music, streamed content, email, text documents or any addressable object on the Internet or even for people profiles.

At a later moment in time the user is searching for a certain picture, video etc and can't recall the title or the location or the time that a picture was taken. The user however can remember or knows that the picture was taken and uploaded to Flickr at a warm day in summer while he was calling his friend. Based on this context, the user can by applying these context items as a "key" to find back the meant picture without knowing where the picture was stored.

The user may also specify a group of artifacts based on an associated context, e.g. all artifacts associated to the context "location may be office coordinates"; and use this defined group for file management configuration as e.g. keep a backup replica of these file on the office backup server.

Alternatively, the artifact could be a people profile. In fact this is not different compared to a digital document, though one could extend the idea with associating the captured context with the profile at the moment you meet the person in place or communicate with him. E.g. capture and associate context to the person to which you send an email or exchange Instant Messages; this can be triggered by the email server. E.g. capture and associate context to the person when you shake hands; this case is more difficult as you have to identify the person. This identity could be sensed and captured subsequently based on a unique identification of a mobile device he/she has in its pocket. Shaking hands may not taken literally but the distance between your mobile device and his/her mobile device could give the trigger. Assistant-GPS can be used for these distance measurements. An alternative solution is the use of RFId for these distance determinations. The trigger here may be some signal of a system determining distance between these two persons.

The system that stores the context data is preferably a system that can refer to any digital object stored in any digital data repository. The user should be able to keep this context meta-data private as it contains his personal (private) context. The systems can differentiate the type of meta-data; i.e. differentiate location information from whether condition, from people in the neighborhood, from personal emotions, etc. As such it can allow the end-user to very precisely specify the context he can remember to recap the full context and so all the artifact to which it is associated.

Although in this embodiment the context repository C-REP is described and presented in the corresponding figures, this context repository may alternatively be implemented by a plurality of distributed repositories.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Artifact management method, for managing an artifact in at least one repository under control of an artifact management server, said at least one repository being coupled to said artifact management server over a communications-link, **CHARACTERISED IN THAT** said method comprises the steps of:
a. at receipt of a trigger at said artifact management server, capturing at least one context of said artifact: and
b. associating by said artifact management server, said context captured with said artifact maintained in said at least one repository.

2. Artifact management method according to claim 1. **CHARACTERISED IN THAT** said Artifact management method further comprises the step of:
c. retrieving an artifact maintained in a said at least one repository (REP) based on a context of said at least one context associated with said artifact.

3. Artifact management method according to claim 1, **CHARACTERISED IN THAT** said trigger is an indication of creation of an artifact in said at least one repository or the execution of any action on said artifact maintained in said at least one repository (REP).

4. Artifact management system (AMSY), comprising an artifact management server (AMSE) for managing an artifact in at least one repository (REP) and said system further comprising said at least one repository for maintaining said artifact, said at least one repository being coupled to said artifact management server over a communications-link, **CHARACTERISED IN THAT** said system further comprises:
a. a context capturing device (CCD), adapted to capture at least one context of said artifact maintained in said at least one repository at receipt of a trigger at said artifact management server (AMSE); and **in that** said artifact Management Server (AMSE) further is adapted to generate an association of said at least one context captured by said context capturing device (CCD) with said artifact maintained in said at least one repository.

5. Artifact management system (AMSY), according to claim 4, **CHARACTERISED IN THAT** said Artifact management system (AMSY) further comprises a context repository (CREP), adapted to maintain said association of said at least one context captured by said context capturing device (CCD) with said artifact maintained in said at least one repository.

6. Artifact management server (AMS) for use in an Artifact management system (AMSY) according to claim 4, **CHARACTERISED IN THAT** said Artifact management server (AMS) comprises a context associating part (CAP), adapted to generate an association of said at least one context captured by said context capturing device (CCD) with said artifact maintained in said at least one repository.

7. Artifact management server (AMS) according to claim 6, **CHARACTERISED IN THAT** said Artifact management server (AMS) further comprises context capture instructing part (CCIP), adapted to instruct a context capturing device to capture at least one context of said artifact maintained in said at least one repository at receipt of a trigger at said artifact management server (AMS).

8. Artifact management server (AMS) according to claim 6 or 7, **CHARACTERISED IN THAT** said context associating part (CAP) further is adapted to store said association generated in a context repository (C-REP).

9. Artifact management server (AMS) according to claim 6 or claim 8 **CHARACTERISED IN THAT** said context associating part (CAP) further is adapted to retrieve an artifact maintained by said at least one repository (REP) based on a context of said at least one context in said association of said at least one context captured by said context capturing device (CCD) with said artifact maintained in said at least one repository.

10. Context capturing device (CCD) for use in an Artifact management system (AMSY) according to claim 4, **CHARACTERISED IN THAT** said context capturing device comprises a context capturing part (CCP), adapted to capture at least one context of said artifact maintained in said at least one repository (C-REP), at receipt of a trigger at said artifact management server (AMS).

11. Context capturing device according to claim 10, **CHARACTERISED IN THAT** said context capturing device (CCD) further comprises a context forwarding part (CFP)

12. Context repository (C-REP), for use in an Artifact management system (AMSY) according to claim 4, **CHARACTERISED IN THAT** said Context repository (C-REP) is adapted to hold an association of said at least one context captured by said context capturing device (CCD) with said artifact maintained in said at least one repository.
